Europäisches Patentamt

European Patent Office

Office européen des brevets

(19)

(11) Veröffentlichungsnummer: **0 295 546 B1**

(12) **EUROPÄISCHE PATENTSCHRIFT**

(45) Veröffentlichungstag der Patentschrift: **02.01.92**

(51) Int. Cl.⁵: **G01P 5/00**, G01N 15/02

(21) Anmeldenummer: **88109082.3**

(22) Anmeldetag: **08.06.88**

(54) **Fiberoptischer Sensor.**

(30) Priorität: **13.06.87 DE 3719806**

(43) Veröffentlichungstag der Anmeldung:
**21.12.88 Patentblatt 88/51**

(45) Bekanntmachung des Hinweises auf die
Patenterteilung:
**02.01.92 Patentblatt 92/01**

(84) Benannte Vertragsstaaten:
**AT BE CH DE FR GB IT LI NL SE**

(56) Entgegenhaltungen:
**EP-A- 0 047 094
EP-A- 0 107 021
EP-A- 0 196 168**

**APPLIED OPTICS, Band 14, Nr. 1, Januar
1975, Seiten 189-196; T.TANAKA et al.:
"Measurement of the Velocity of Blood Flow
(in vivo) Using a Fiber Optic Catheter and
Optical Mixing Spectroscopy"**

**PATENT ABSTRACTS OF JAPAN, Band 9, Nr.
54 (P-340)(1777), 8. März 1985; & JP-A-59 192
966**

**APPLIED OPTICS, Band 21, Nr. 10, Mai 1982,
Seiten 1785-1790, New York, USA;**

**H.NISHIHARA et al.: "Optical-fiber laser
doppler velocimeter for high-resolution measurement of pulsatile blood flows"**

**REVIEW OF SCIENTIFIC INSTRUMENTS, Band
49, Nr. 8, August 1978, Seiten 1090-1094;
N.ABUAF et al.: "Optical probe for local void
fraction and interface velocity measurements"**

(73) Patentinhaber: **BASF Aktiengesellschaft
Carl-Bosch-Strasse 38
W-6700 Ludwigshafen(DE)**

(72) Erfinder: **Auweter, Helmut, Dr.
Lessingstrasse 35
W-6703 Limburgerhof(DE)**
Erfinder: **Horn, Dieter, Dr.
Schroederstrasse 69
W-6900 Heidelberg(DE)**
Erfinder: **Lilge, Dieter, Dr.
Albert-Einstein-Allee 33
W-6703 Limburgerhof(DE)**
Erfinder: **Wortmann, Jürgen, Dr.
Albert-Schweizer-Strasse 23
W-6703 Limburgerhof(DE)**

EP 0 295 546 B1

## Beschreibung

Die vorliegende Erfindung betrifft einen fiberoptischen Sensor zur Messung der Dopplerverbreiterung von gestreutem Laserlicht nach dem Prinzip der quasi-elastischen Lichtstreuung (QELS), wobei das Streulicht von Partikeln in Bewegung herrührt.

Ein fiberoptischer Sensor kann in Verbindung mit einer geeigneten optisch-elektronischen Meßeinrichtung zu zwei grundsätzlich unterschiedlichen Anwendungszwecken benutzt werden. Zum einen wird der fiberoptische Sensor in der Velocimetrie eingesetzt. Hier können Strömungsgeschwindigkeiten, Geschwindigkeitsgradienten und Turbulenzen selbst an entlegenen, einem direkten Laserstrahl unzugänglichen Stellen gemessen werden. Als Beispiele seien nur Strömungen in Metallrohren, in Verbrennungsmotoren und in Blutbahnen genannt.

Zum anderen kann ein fiberoptischer Sensor in der physikalisch-chemischen Analytik eingesetzt werden, um Diffusionskoeffizienten und Durchmesser von dispergierten kolloidalen Partikeln mit den Methoden der Photonen-Korrelations-Spektroskopie zu bestimmen. Ein fiberoptischer Sensor ermöglicht diese Messungen in situ, insbesondere auch an schwer zugänglichen Stellen, wie z.B. in Reaktionsgefäßen oder explosionsgefährdeten Räumen. Ferner können mit Hilfe eines fiberoptischen Sensors hochkonzentrierte und absorbierende Proben untersucht werden. Diese Eigenschaften lassen fiberoptische Sensoren zum Einsatz bei der Kontrolle und Steuerung von Produktionsvorgängen geeignet erscheinen. Das Meßprinzip der fiberoptischen quasi-elastischen Lichtstreuung (FOQELS) macht sich die Dopplerverschiebung von Laserlicht, das an bewegten Streuzentren gestreut worden ist, zunutze. Bei Anwendungen in der Velocimetrie ist die Partikelbewegung durch eine Strömung bedingt. Bei Anwendungen zur Bestimmung von Diffusionskoeffizienten und damit von Partikeldurchmessern ist dagegen die Teilchenbewegung durch die Brownsche Molekularbewegung bedingt.

Die technische Realisierung eines entsprechenden Meßaufbaus unter Verwendung eines fiberoptischen Sensors ist bekannt und in der Literatur beschrieben (Applied Optics 14 (1975), 189-196). Hierbei ist der apparative Aufbau dadurch gekennzeichnet, daß das Laserlicht über einen Strahlteiler zu einer fiberoptischen Sonde gelenkt wird. Das vom streuenden medium rückgestreute Licht wird vom selben Strahlteiler teilweise zu einem Photodetektor reflektiert. Auf diese Weise gehen mindestens 75 % der zur Verfügung stehenden Lichtintensität verloren.

Eine Reduzierung dieses Intensitätsverlustes wird erreicht, indem man anstelle eines Strahlteilers einen vollreflektierenden Spiegel verwendet, in dessen Mitte ein Loch gebohrt ist (Microwaves, Optics and Acoustics 2 (1978), 13). Durch dieses Loch tritt der Laserstrahl ungeschwächt durch den Spiegel hindurch und wird auf eine fiberoptische Sonde fokussiert. Das vom streuenden Medium rückgestreute Licht wird nach Austritt aus der fiberoptischen Sonde unter dem von der numerischen Apertur des Lichtleiters bestimmten Winkel von der Fokussierungslinse kollimiert und leuchtet eine relativ große Fläche des Spiegels aus. Somit wird ein großer Prozentsatz des Streulichts auf den Photodetektor reflektiert. Je nach Dimensionierung liegen die Verluste nur bei 5 % bis 10 % der Lichtintensität.

Die quantitative Erfassung der Dopplerverschiebung des gestreuen Lichts erfolgt bei dem beschriebenen Meßprinzip durch heterodyne Detektion, da auf dem Photodetektor eine Überlagerung von gestreutem, dopplerverschobenem Licht mit nichtverschobenem Laserlicht registriert wird. Das nichtverschobene Laserlicht rührt von Reflexionen am Ende der fiberoptischen Tauchsonde sowie von Rayleigh-Streulicht an Störstellen des Lichtleiters her. Die elektronische Aufzeichnung des heterodynen Fluktuationssignals erfolgt wahlweise mit den Methoden der Frequenz- oder Autokorrelationsanalyse. Aus dem Verlauf der gemessenen Frequenzverteilung bzw. Autokorrelationsfunktion können die Strömungsgeschwindigkeiten bzw. die Diffusionskoeffizienten ermittelt werden. Für monodisperse, kugelförmige und nicht wechselwirkende Partikel ist z.B. der Zusammenhang zwischen der Abklingkonstanten $\gamma$ der Autokorrelationsfunktion, die identisch ist mit der Halbwertsbreite der lorentzförmigen Frequenzverteilung, und dem Diffusionskoeffizienten D gegeben durch

$$\gamma = DK^2,$$

wobei K der Streuvektor ist.

Bei der Auswertung der Meßergebnisse ist zu beachten, daß eine 180°-Streugeometrie vorliegt. Das bedeutet, daß für polydisperse Proben ein mittlerer Diffusionskoeffizient der Form

$$\overline{D}_{180^0} = \frac{\sum_i N_i M_i^2 P(180^0, M_i) D_i}{\sum_i N_i M_i^2 P(180^0, M_i)}$$

gemessen wird, wobei $N_i$ die Anzahl, $M_i$ die Masse, $D_i$ der Diffusionskoeffizient und $P(180°, M_i)$ die Streufunktion der Partikeln der i-ten Komponente der polydispersen Verteilung ist. Daraus läßt sich über die Stokes-Einstein-Beziehung

$$\overline{d}_{180^0} = \frac{kT}{3\pi\eta D_{180^0}}$$

der zugehörige hydrodynamische, kugeläquivalente Partikeldurchmesser $d_{180°}$ berechnen. Dabei ist k die Boltzmann-Konstante, T die Temperatur und $\eta$ die Viskosität des Lösungsmittels.

Einige Nachteile der genannten meßtechnischen Verfahren wurden neuerdings (US 4 637 716) dadurch überwunden, daß kohärentes Laserlicht über einen fiberoptischen Koppler einem fiberoptischen Sensor zugeführt wird, der als Tauchsonde in das streuende Medium eintaucht, das vom streuenden Medium rückgestreute Licht durch den gleichen fiberoptischen Sensor aufgenommen, durch den fiberoptischen Koppler verzweigt und zu einem Photodetektor geleitet wird. Nach dem Stand der Technik steht die Austrittsfläche für das Laserlicht am Ende des Sensors senkrecht zur Längsachse der Lichtleitfaser.

Der Aufbau des fiberoptischen Meßverfahrens wird weiter vereinfacht und verbessert, indem als Laser ein integrierter Halbleiterlaser verwendet wird und das Laserlicht direkt über einen Lichtleiter zum fiberoptischen Koppler geleitet wird; indem als Photodetektor ein integrierter Detektor, z.B. eine Silizium-Avalanche-Photodiode verwendet wird und das von dem fiberoptischen Koppler abgezweigte Streulicht direkt über einen Lichtleiter zu dem Detektor geleitet wird; indem der optische Aufbau voll integriert ist, und indem die fiberoptische Tauchsonde aus einem mit einer Endhülse terminierten Lichtleiter besteht, der zusätzlich von einem schützenden Rohr umgeben und außerdem an der Austrittsfläche des Laserlichtes hydrophobisiert ist.

Die nach diesem Stand der Technik erzielten Vorteile bestehen insbesondere darin, daß statt eines diskreten apparativen Aufbaus aus einzelnen, präzise gehalterten optischen Komponenten ein teilweise oder voll integrierter optischer Aufbau vorgenommen wird, so daß der Weg des Laserlichts und des gestreuten Lichts großteils oder ganz durch Lichtleiter und fiberoptische Komponenten führt. Dadurch entfallen alle diskreten optischen Komponenten, und es entfällt die Forderung nach interferometrischer Stabilität des Aufbaus.

Die Anordnung kann überall betrieben werden, da ein Aufbau auf einer optischen Tischplatte nicht mehr notwendig ist. Die fiberoptischen Komponenten werden lediglich durch entsprechende Steckverbindungen miteinander verbunden. Außerdem kann die Messung an unzugänglichen Stellen vorgenommen werden, da die fiberoptische Tauchsonde flexibel ist und von beträchtlicher Länge sein kann.

Durch Verwendung von in der Nachrichtentechnik gebräuchlichen fiberoptischen Komponenten wird die Handhabung der fiberoptischen quasi-elastischen Lichtstreuung (FOQELS) sehr einfach. Damit eröffnen sich viele neue Anwendungsmöglichkeiten in der Velocimetrie und bei der Messung von Diffusionskoeffizienten in der Forschung und in der Praxis.

Ein wesentlicher Nachteil der vorbeschriebenen Meßtechnik besteht jedoch darin, daß Messungen nur an Systemen mit hoher Streuzentrenkonzentration durchgeführt werden können. So waren Messungen an Latex-Dispersionen nur in einem Konzentrationsbereich $\geq$ 1 % möglich (US 4 637 716). Die fiberoptische Version der quasi-elastischen Lichtstreuung (FOQELS) eröffnet somit für die meßtechnische Charakterisierung disperser Systeme durch QELS zwar einen weiten Konzentrationsbereich, da die standardisierte Ausführung der QELS hochverdünnte Systeme erfordert, und stellt damit einen erheblichen technischen Fortschritt dar.

Es besteht allerdings auch an der Charakterisierung verdünnter disperser Systeme mittels Tauchsonde ein erhebliches Interesse, da die standardisierte Ausführung der QELS eine Überführung der Meßprobe in eine gerätespezifische Meßküvette erfordert, was in vielen Fällen im technischen und biologischen Bereich wegen der notwendigen Manipulationen und der Größe des erforderlichen Probenvolumens den Einsatz des Meßverfahrens erschwert oder sogar unmöglich macht. Solche Aufgabenstellungen ergeben sich bei allen in-situ-Meßanwendungen, wenn nur geringe Teilchenkonzentrationen zur Verfügung stehen, z.B. bei der faseroptischen Laser-Doppler-Anemometrie mit Tracerpartikelkonzentrationen << 1 % oder bei der Messung der Keimbildungs-/Wachstumskinetik zu Beginn der Präzipitationsreaktion in einem Kristallisationsreaktor. Im biologischmedizinischen Bereich ist die Charakterisierung einer immunologischen Agglutinations-Reaktion, die z.B. durch die Agglomeration von antigen-bzw. antikörper-modifizierten Latexpartikeln nachgewiesen werden kann, durch FOQELS bei geringer Antigen-/Antikörper-Konzentration und einem Probenvolumen im $\mu$l-Bereich von größtem Interesse.

Der vorliegenden Erfindung liegt daher die Aufgabe zugrunde, einen fiberoptischen Sensor zu entwickeln, der auch bei Teilchenkonzentrationen von < 1 Vol.-% durch QELS die in-situ-Messung des Diffusionskoeffizienten dieser Streuzentren ermöglicht und ggf. solche Messungen bei einem Probenvolumen im $\mu$l-Bereich gestattet.

Diese Aufgabe wird erfindungsgemäß durch die Merkmale des Patentanspruchs gelöst.

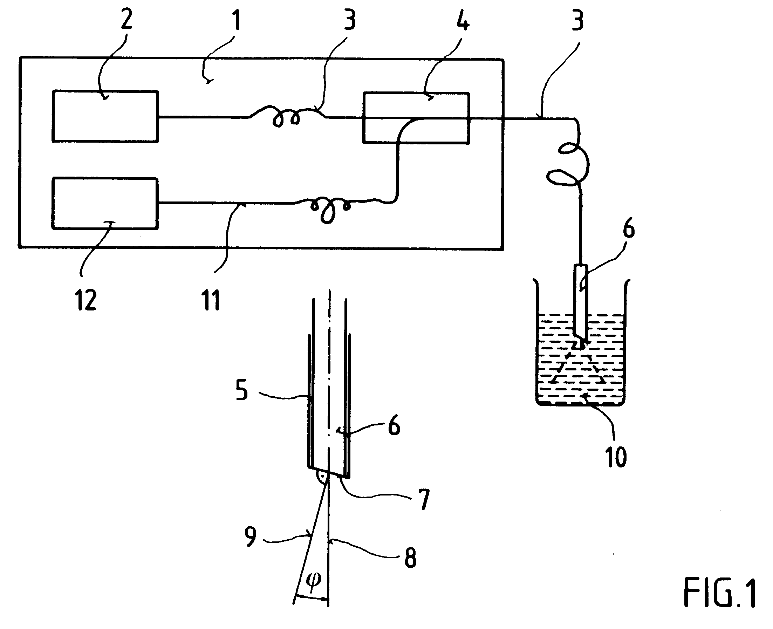

Ein Ausführungsbeispiel der Erfindung wird in Figur 1 erläutert. Unter Verwendung eines optoelektronischen FOQELS-Aufbaus nach dem Stand der Technik 1 wird Laserlicht von der Lichtquelle 2 über eine Lichtleitfaser 3 und nach Durchlaufen eines Kopplers 4 dem als Tauchsonde ausgebildeten und mit einer Endhülse 5 terminierten Sensor 6 zugeleitet, den es durch die mit dem Neigungswinkel $\phi$ abgeschrägte Faserendfläche 7 verläßt, wobei der Neigungswinkel $\phi$ durch die optische Achse 8 der Lichtleitfaser 3 und die Flächennormale 9 der Austrittsfläche aufgespannt wird.

Das von der Probe 10 rückgestreute Licht tritt über die Faserendfläche wieder in den Lichtleiter 3 ein und gelangt nach Aufspaltung im Koppler 4 über einen Lichtleiter 11 auf einen Detektor 12 mit zugehöriger Signalverarbeitungselektronik.

Während bei Ausführung der FOQELS unter Verwendung eines fiberoptischen Sensors nach dem Stand der Technik, d.h. $\phi = 0°$, Messungen bei Teilchenkonzentrationen < 1 Gew.-% nicht möglich sind, da nach Analyse des rückgestreuten Lichts in 12 keine Korrelationsfunktion erhalten wird, ist es sehr überraschend, daß bei einem Neigungswinkel von $\phi > 1°$ von der gleichen Probe noch bei hundertfacher Verdünnung eine Korrelationsfunktion registriert wird, aus der der Diffusionskoeffizient ermittelt und über die Stokes-Einstein-Beziehung der Partikeldurchmesser berechnet werden kann.

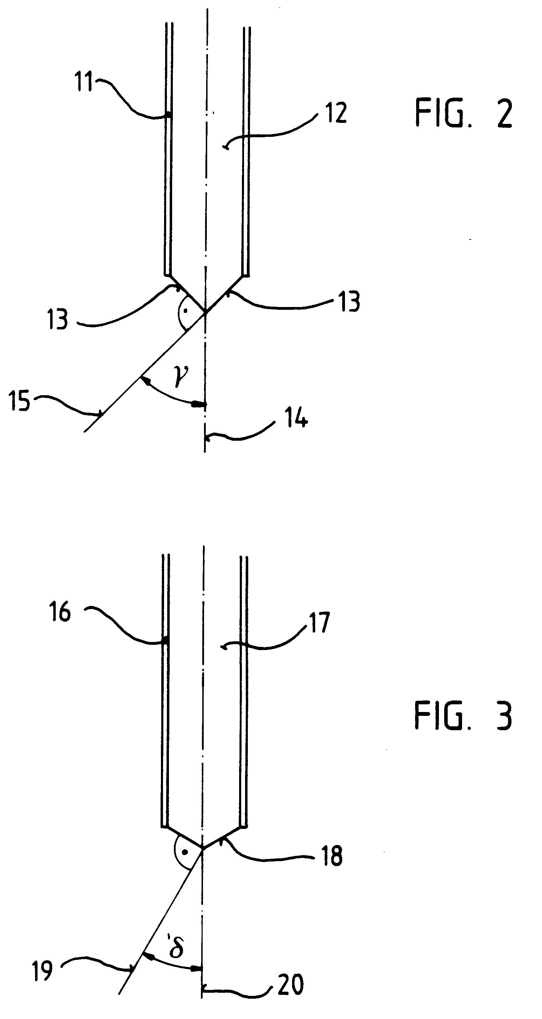

Eine weitere Ausführungsform der Erfindung ist in Figur 2 gezeigt. Das gemäß Figur 1 dem Sensor 12 über die Lichtleitfaser 3 zugeleitete Laserlicht verläßt den als Tauchsonde ausgebildeten und mit einer Endhülse 11 terminierten Sensor 12 über die dachförmig unter dem Neigungswinkel $\gamma$ abgeschrägte Faserendfläche 13, wobei der Neigungswinkel $\gamma$ durch die optische Achse 14 der Lichtleitfaser 3 und die Flächennormale 15 der dachförmigen Austrittsfläche definiert wird.

Eine weitere Ausführungsform der Erfindung zeigt Figur 3. Das Laserlicht verläßt den mit einer Endhülse 16 terminierten Sensor 17 durch die kegelförmig unter dem Winkel $\delta$ abgeschrägte Endfläche 18. Dabei wird der Neigungswinkel $\delta$ durch das Lot auf die Kegelmantelfläche 19 und die optische Achse der Lichtleitfaser 20 aufgespannt.

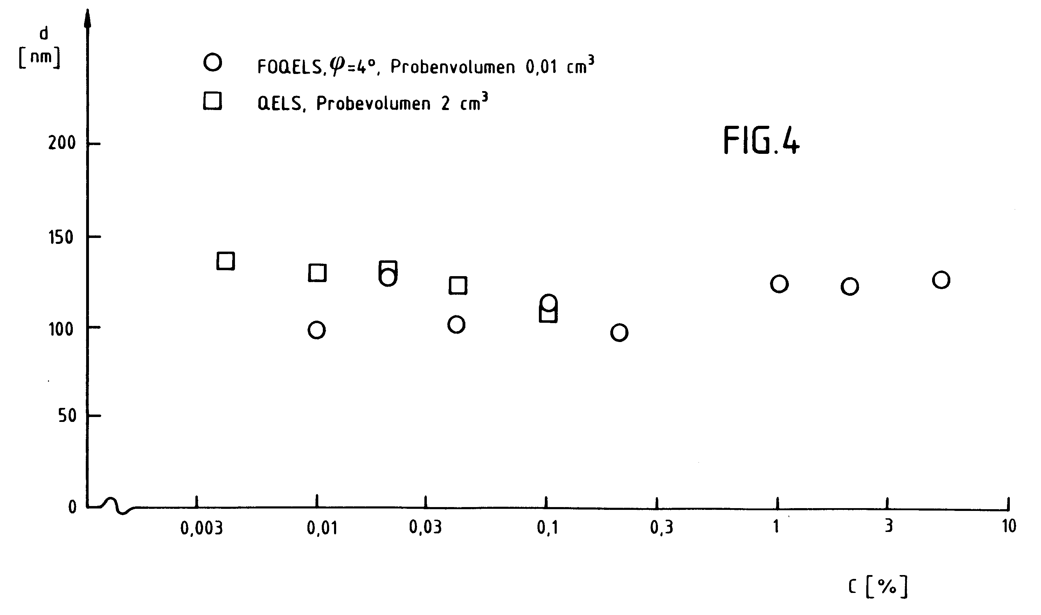

Figur 4 zeigt bei Verwendung der in Fig. 1 beschriebenen Meßanordnung als typisches Meßergebnis den Teilchendurchmesser einer Latexprobe bei Variation der Feststoffkonzentration über drei Zehnerpotenzen zwischen 0,01 Gew.-% und 10 Gew.-%. Die Messungen wurden unter Verwendung einer Multimodenfaser durchgeführt, wobei der Neigungswinkel der Faserendfläche am Sensor $\phi = 4°$ betrug. Im Vergleich zu den fiberoptisch erhaltenen Meßergebnissen sind noch einige Meßpunkte eingetragen, die durch konventionelle QELS unter Verwendung einer Meßküvette mit 1 cm Schichtdicke erhalten wurden. Im Konzentrationsbereich zwischen 0,01 Gew.-% und 0,1 Gew.-%,

wo Messungen sowohl durch konventionelle QELS als auch nach der erfindungsgemäßen Version der FOQELS möglich sind, wird eine gute Übereinstimmung der Meßergebnisse gefunden. Allerdings wird zur Durchführung der QELS-Messung eine Küvettenfüllmenge von 2 cm³ benötigt, während für die FOQELS-Messung lediglich ein Probenvolumen von 0,01 cm³ erforderlich ist.

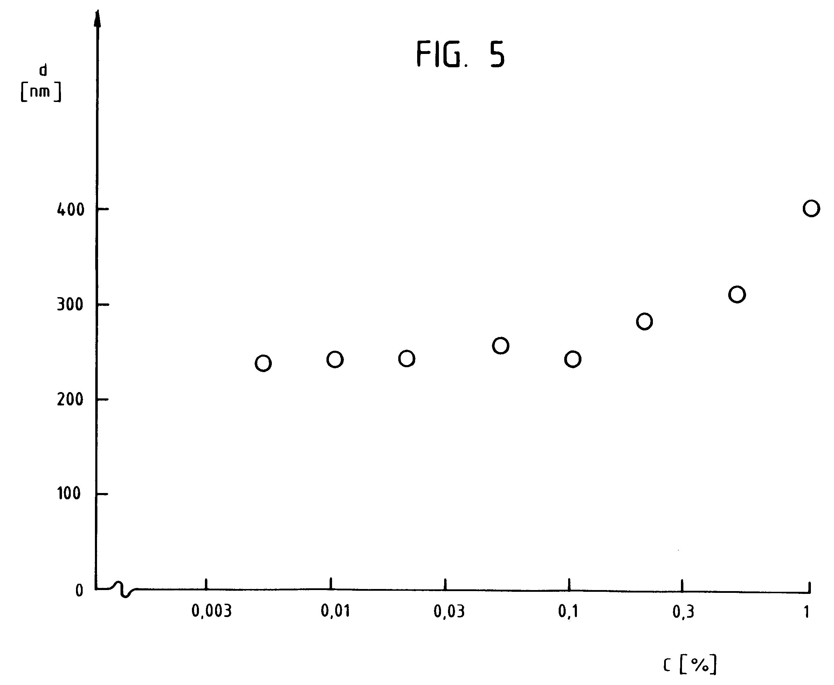

Figur 5 zeigt das Ergebnis einer Teilchengrößenmessung gemäß Fig. 1 bei einer Verdünnungsreihe eines $\beta$-Carotin-Mikronisats unter Verwendung einer Monomodenfaser, wobei der Neigungswinkel der Faserendfläche am Sensor $\phi \triangleq 2°$ beträgt. Bei Konzentrationen c > 1 % zeigen sich Abweichungen vom tatsächlichen Teilchendurchmesser, da die freie Diffusion der Teilchen durch Wechselwirkung untereinander behindert ist. Bei diesem System sind sogar Messungen bei c = 0,005 % möglich. Das für die Messung erforderliche Probenvolumen beträgt bei einem Faserdurchmesser von 5 $\mu$m nur wenige $\mu$l.

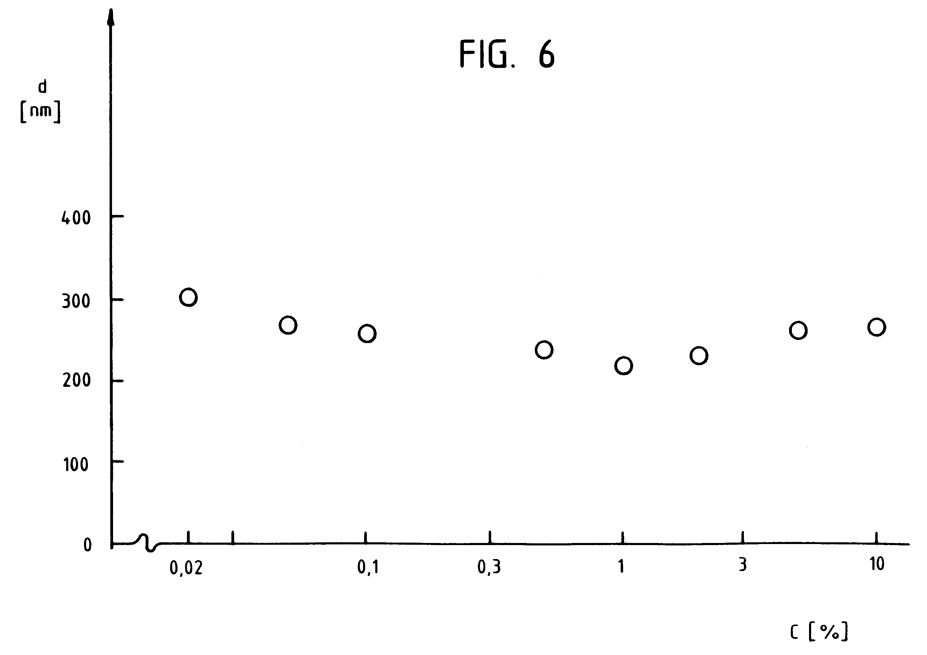

Figur 6 zeigt das Ergebnis der Teilchengrößenmessung gemäß Fig. 1 bei einer Verdünnungsreihe einer Latexprobe im Konzentrationsbereich 0,02 % bis 10 % unter Verwendung einer Monomodenfaser, wobei der Neigungswinkel der Faserendfläche am Sensor 4° beträgt.

## Patentansprüche

1. Fiberoptischer Sensor zur Messung der Dopplerverbreiterung von gestreutem Laserlicht nach dem Prinzip der quasi-elastischen Lichtstreuung, QELS, wobei das Streulicht von Partikeln in Bewegung herrührt, mit einer Austrittsfläche (7) für das Laserlicht am Ende einer als Tauchsonde verwendeten monomoden oder multimoden Lichtleitfaser (3), dadurch gekennzeichnet, daß die Austrittsfläche unter einem Neigungswinkel $0 < \phi \leq 15°$, vorzugsweise $1° \leq \phi \leq 6°$, abgeschrägt ist, wobei der Neigungswinkel $\phi$ durch die optische Achse (8) der Lichtleitfaser (3) und die Flächennormale (9) der Austrittsfläche (7) aufgespannt wird.

## Claims

1. A fiber-optical sensor for measuring the Doppler broadening of scattered laser light by the principle of quasi-elastic light scattering, QELS, the scattered light originating from particles in movement, the sensor having an emergence surface (7) for the laser light at the end of a single-mode or multimode light guide (3) used as an immersion probe, wherein the emergence surface is inclined at an angle $0 < \phi \leq 15°$, preferably $1° \leq \phi \leq 6°$, the angle of inclination $\phi$ being defined by the optical axis (8) of the light guide (3) and the normal (9) of the emergence surface (7).

**Revendications**

1.  Capteur à fibre optique pour la mesure de l'élargissement Doppler de lumière laser dispersée, selon le principe de la dispersion de lumière quasi-élastique, QELS, la lumière dispersée provenant de l'agitation de particules en mouvement, avec une surface de sortie (7) pour la lumière laser à l'extrémité d'une fibre optique monomode ou multimode, utilisée comme sonde-plongeur caractérisé par le fait que la surface de sortie est biseautée sous un angle d'inclinaison $0 < \phi \leq 15°$, avantageusement $1° < \phi \leq 6°$, l'angle d'inclination étant délimité par l'axe optique (8) de la fibre optique (3) et la normale (9) à la surface de sortie (7).

FIG.1

FIG. 2

FIG. 3

FIG.4

○ FOQELS, $\varphi = 4°$, Probenvolumen 0,01 cm³

□ QELS, Probevolumen 2 cm³

EP 0 295 546 B1

FIG. 5

EP 0 295 546 B1

FIG. 6

EP 0 295 546 B1